## Europäisches Patentamt

## European Patent Office

## Office européen des brevets

(11) Veröffentlichungsnummer: **0 216 751**
**A2**

## EUROPÄISCHE PATENTANMELDUNG

(21) Anmeldenummer: 86890259.4

(22) Anmeldetag: 19.09.86

(51) Int. Cl.⁴: **E 02 D 31/00**
E 02 D 3/12, B 09 B 1/00

(30) Priorität: 19.09.85 AT 2733/85

(43) Veröffentlichungstag der Anmeldung:
01.04.87 Patentblatt 87/14

(84) Benannte Vertragsstaaten:
AT BE CH DE FR GB IT LI LU NL SE

(71) Anmelder: ÖMV Aktiengesellschaft
Otto Wagner-Platz 5
A-1090 Wien (AT)

(72) Erfinder: Hippmann, Franz, Dipl.-Ing.
Paradisgasse 71/3/4
A-1190 Wien (AT)

(74) Vertreter: Collin, Hans, Dipl.-Ing. Dr. et al
Patentanwälte Dipl.-Ing. Dr. Hans Collin Dipl.-Ing. Erwin
Buresch Dipl.-Ing. Dr. Helmut Wildhack Dipl.-Ing. Armin
Häupl Mariahilfer Strasse 50
A-1070 Wien (AT)

(54) Verfahren zur nachträglichen In-Situ-Abdichtung bzw. Nachdichtung bzw. Sanierung von Altdeponien, d.h. alten, zugeschütteten Mülldeponien, sogenannten Altlasten, und kontaminierten Standorten.

㉗ Gegenstand der Erfindung ist ein Verfahren zur nachträglichen in-situ-Abdichtung bzw. Nachdichtung bzw. Sanierung von Altdeponien, sog. Altlasten und kontaminierten Standorten. Aufgabe der Erfindung ist die nachträgliche Abdichtung bzw. Sanierung solcher alter Müll- u.dgl. -Deponien, wobei insbesondere das Austreten von Sickerwässern, Sickergasen u.dgl., aus solchen Altlasten und kontaminierten Standorten minimiert bis ganz verhindert und damit Gefährdungen von Grundwässern, Oberflächenwässern und angrenzenden Grundstücken unterbunden werden sollen. Dies wird erfindungsgemäß dadurch erreicht, daß zunächst mittels an sich bekannter Methoden, vorzugsweise geoelektrischer Meßmethoden, die Gestalt, d.h. Form und Tiefe, der Deponiesohle und der Böschungsbereiche festgestellt wird, daß daraufhin Rohre mit Öffnungen nahe bzw. an ihrem unteren Ende bzw. im unteren Bereich perforierte Rohre, über die Deponiefläche verteilt bis zu dieser Deponiesohle und diesen Böschungsbereichen eingebracht werden und daß schließlich durch diese Rohre Dichtmassen zur Bildung einer dichten Wanne in die Sohlen- und Böschungsbereiche des Deponiekörpers eingebracht werden.

**Beschreibung**

Verfahren zur nachträglichen In-Situ-Abdichtung bzw. Nachdichtung bzw. Sanierung von Altdeponien, d.h. alten, zugeschütteten Mülldeponien, sogenannten Altlasten, und kontaminierten Standorten

Die Erfindung bezieht sich auf ein Verfahren zur nachträglichen in-situ-Abdichtung bzw. Nachdichtung bzw. Sanierung von Altdeponien, sog. Altlasten, und kontaminierten Standorten.

Ziel der Erfindung ist die nachträgliche Abdichtung bzw. Sanierung solcher alter Müll- u.dgl. -Deponien, wobei insbesondere das Austreten von Sickerwässern, Sickergasen u.dgl. aus solchen Altlasten und kontaminierten Standorten minimiert bis ganz verhindert und damit Gefährdungen von Grundwässern, Oberflächenwässern angrenzenden Grundstücken unterbunden werden sollen.

Dies wird bei dem eingangs näher bezeichneten Verfahren erfindungsgemäß dadurch erreicht, daß zunächst mittels an sich bekannter Methoden, vorzugsweise geoelektrischer Meßmethoden, die Gestalt, d.h. Form und Tiefe, der Deponiesohle und der Böschungsbereiche festgestellt wird, daß daraufhin Rohre mit Öffnungen nahe bzw. an ihrem unteren Ende bzw. im unteren Bereich perforierte Rohre über die Deponiefläche verteilt bis zu dieser Deponiesohle und diesen Böschungsbereichen eingebracht werden, und daß schließlich durch diese Rohre Dichtmassen zur Bildung einer dichten Wanne in die Sohlen- und Böschungsbereiche des Deponiekörpers eingebracht werden.

Dabei wird vorzugsweise das Einbringen der Dichtmasse durch Einpressen bei relativ niedrigem Druck, vorzugsweise maximal 10 bar, vorgenommen. Dies ergibt den Vorteil eines relativ geringen apparativen Aufwandes.

Als Dichtmasse wird bevorzugt eine Bentonit/ Wasser-Suspension mit vorzugsweise 20 bis 60 kg Bentonit je m$^3$ Wasser, und gegebenenfalls mit Zusätzen von Zementen, Mahltonen, od.dgl., von Kreide, Wasserglas, od.dgl. verwendet. Es kann aber auch ein Harz, insbesondere in Form eines Gels, als Dichtmasse verwendet werden. Als Dichtmasse eignet sich somit vor allem ein Material, das sich im Sohlbereich ausbreiten kann, das abdichtend wirkt, chemisch restistent und dauerhaft ist und das auch eine gewisse Dauerelastizität besitzt. Als Dichtharze sind u.a. verschiedene organische Polymere geeignet; insbesondere Acrylsäurederivate, wie z.B. Polyacrylamide, die auch zusammen mit inerten Füllstoffen verarbeitbar sind und auch elastische, gut quellbare Gele bilden können.

Eine weitere gut einbringbare Dichtmasse ist Bitumen, insbesondere in Form leicht oder weniger leicht brechbarer wässeriger Emulsionen, wie sie im Straßenbau Verwendung finden, da diese kalt einbringbar sind und auch keine organischen Lösungsmittel enthalten. Die Bitumenemulsionen können in Kombination mit Dichtgelen. bzw. auch Dichtharzen, vorzugsweise in Mischung damit, eingesetzt werden und auch Füllstoffe, wie z.B. Bentonit, enthalten. Beispielsweise kann eine Bitumenemulsion eingesetzt werden, in der Kunststoffteilchen dispergiert sind.

Bevorzugt ist dabei, daß die Einbringung der Dichtmasse vorzugsweise unter dem Eigengewichts-Druck dieser Masse vorgenommen wird, wobei zur Erhöhung des spezifischen Gewichtes der Dichtmasse dieser ein Zusatz mit höherem spezifischen Gewicht, z.B. Schwerspat, beigegeben wird. Dadurch breitet sich das Dichtmaterial infolge des statischen Druckes im Sohlen- und Böschungsbereich von selbst aus und kommt bei Gleichgewicht zwischen Eigengewicht der Dichtmasse und spezifischem Fließwiderstand auch von selbst zur Ruhe. Man arbeitet somit mit besonders beschwertem Dichtungsmaterial, das hinsichtlich des spezifischen Gewichtes aufgefüttert worden ist.

Gemäß einer weiteren Ausgestaltung des erfindungsgemäßen Verfahrens kann zur Minimierung der Sickerwässer eine wasserdichte Schicht oder eine Pflanzenabdeckung auf die Deponie aufgebracht werden, wobei die Pflanzenabdeckung das Regenwasser aufnimmt und verbraucht.

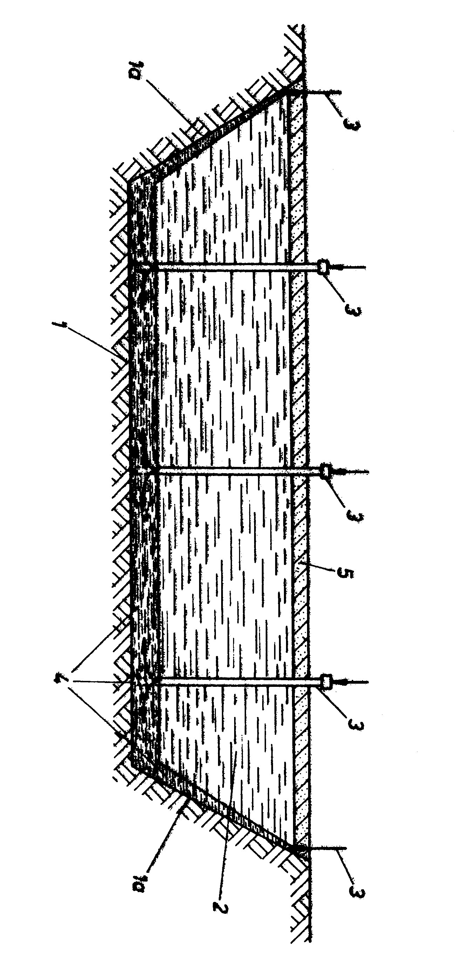

Das erfindungsgemäße Verfahren wird nun unter Bezugnahme auf die Zeichnung näher beschrieben; in dieser ist ein schematischer Querschnitt durch eine Mülldeponie dargestellt.

Mit 1 ist der Untergrund bzw. die Sohle der Deponie bezeichnet, mit 1a deren Böschungsbereiche. In der so gebildeten Grube ist das Deponiegut bzw. der Müll 2 enthalten und von einer Deckschicht 5 abgedeckt. Mittels der Injektions-bzw. Sondenrohre 3, die in ihrem unteren Bereich perforiert sind, wird die Dichtmasse 4 auf die Sohle 1 und die Böschungsbereiche 1a aufgebracht und somit nachträglich das Deponiegut 2 mit einer dichten Wanne umgeben.

Das erfindungsgemäße Verfahren umfaßt somit zwei, gegebenenfalls auch drei wesentliche Schritte: Wichtig ist, nach geeigneter Erfassung - siehe Abschnitt 1 - der Situation durch Einpressen (Einbringen, Injizieren) geeigneter Dichtmassen in den sohlnahen Bereich (Schichten) des geschütteten Deponiekörpers sowie austrittsgefährdeter Böschungen eine dichte Wanne herzustellen (Abschnitt 2).

Sich hier möglicherweise aufstauende Sickerwässer oder Sickergase sind (Abschnitt 3) zu entfernen, ihr Zustandekommen ist aber durch vorbeugende Maßnahmen zu minimieren.

Abschnitt 1:

Von allen bisher Beteiligten wie Betreibern, Betroffenen, Anrainern, Behörden, Umweltschutzorganen u.dgl. sind alle erreichbaren Auskünfte und Unterlagen über
Lage, Umfang, Tiefe des Areals
Menge, Art und Ort des abgelagerten Materials
Grundwasser- und Bodenverhältnisse sowie alle umweltrelevanten Informationen
einzuholen.

Diese Angaben sind zu ergänzen -ersetzen durch geophysikalische Maßnahmen, wie
geoelektrische Tiefensondierungen
Flächenkartierungen
Schichtaufnahmen

geomagnetische Aufnahmen

Radarsondierungen

elektromagnetische Induktionssondierungen u.dgl.

weiters

Probebohrungen

Ramm-Drucksondierungen

sonstige Aufschlüsse und Bemusterungen.

Die Auswertung und Interpretation dieses Unterlagenmaterials erlaubt die Enscheidung darüber, wie die unter Abschnitt 2 beschriebene Methode anwendbar bzw. zu optimieren ist; diese kann dann auch mit anderen Methoden wie (Teil)-Umlagerung, hydrologischen Maßnahmen, Umspundung, u.a. kombiniert werden oder bis zur totalen Ausfüllung geführt werden.

Hier sollen vorzugsweise geoelektrische und mikromagnetische Strukturuntersuchungen und deren Interpretation raschen Aufschluß geben.

Abschnitt 2:

Die angestrebte Nachdichtung einer Altlast wird erreicht durch Erzeugen einer dichten Wanne nach Injizieren von Dichtmassen in deren Sohlen- und Böschungsbereiche in der Art, daß

- in Abständen, die durch Art bzw. Dichtlagerung des Deponiegutes bedingt sind, Injektions- bzw. Sondenrohre bis zur Sohle eingebracht, d.h. geschlagen, gerammt, gepreßt, gebohrt, werden. Die Perforation dieser Sonden im untersten Bereich, das sind bis etwa 1,5 m über der Spitze, erlaubt den Austritt des Infiltrats nur im Sohlenbereich.

- die injizierten Massen die vorhandenen Porenräume des Deponiegutes im Sohlenbereich erfüllen; dazu werden vorwiegend Bentonit/Wasser-Suspensionen mit 20 bis 60 kg Bentonit je m³ Wasser, fallweise mit Zusätzen von Zementen oder ähnlichem zur Erhöhung der Dichte, von Wasserglas oder ähnlichem zur Erhöhung der chemischen Beständigkeit, sowie im Bedarfsfalle mit weiteren Zusätzen versehen, mit niederen Drücken (bis zu 10 bar, nur in Bedarfsfällen auch höher) eingepreßt, auch sonstige Dichtgele -Harze sind anwendbar.

- ihre Undurchlässigkeit alle Wegsamkeiten für Sickerwässer unterbindet; der Durchlässigkeitsbeiwert ist mit $k_f \leq 1.10^{-8}$ m/s nachzuweisen.

- durch geeignete Sondenausteilung, meist im Sechseckverband, ein lückenloser Zusammenschluß der eingepreßten Dichtmassen zur Erzielung einer geschlossenen Dichtungsschichte über die gesamte Schlfläche der Deponie (Dichtsohle) erreicht wird, und zwar, bis Dichtmaterial den vom Nachbarrohr erfaßten Bereich überschneidet. Desgleichen werden in Abständen die Böschungen (Wände) beaufschlagt; auch hier bildet sich durch geringes Eindringen des Dichtmittels in den anstehenden Boden ein ausreichender "Filterkuchen". Es wird eine "Wanne" hergestellt.

- die eingesetzten Dichtmassen durch ihre Zusammensetzung gegen eventuellen chemischen Angriff aus der Beschaffenheit von Sickerwässern beständig sind und durch ihre physikalischen Eigenschaften nach Veränderungen im Deponiegut (Rotte,..) neu entstehende Hohlräume sofort aufzufüllen vermögen.

- die Dichtschicht durch ihre Dauerplastizität möglicherweise auftretende Veränderungen des Untergrundes (Setzungen, sonstige Rißbildungen), mitmacht, d.h. selbstdichtend ist.

- soviel Dichtmaterial eingebracht wird, daß im Sohlenbereich eine Dicke (Höhe) der Dichtschicht von im Mittel zumindest 0,5 m, im Böschungsbereich eine geschlossene Benetzung erreicht wird.

Die erzielte Ausbreitung und Schichtdicke der eingebrachten Dichtmassen wird schließlich durch auf die jeweils den Gegebenheiten abzustimmenden geoelektrischen Flächenkartierungen dokumentiert.

Abschnitt 3:

Nach erfolgter Abdichtung kommt dem Wasserhaushalt der Deponie größere Bedeutung zu. Bei Bedarf sind Niederschlagswässer.

- fernzuhalten durch Gestaltung der Geländeoberfläche (Neigung, Abfuhr);

- am Einsickern zu hindern durch dichteres Abdeckmaterial, eventuelle Dichtschichte, standortgem. Begrünung;

- und Sickerwässer aus dem Deponiekörper abzupumpen, dazu können Einpreßsonden verbleiben oder sonstige Entnahmemöglichkeiten geschaffen werden.

Der beeinflußte Bereich ist durch längere Zeit zu beobachten und auf das Auftreten von Sickerwässern und -gasen zu prüfen. In Sonderfällen können auch auftretende Deponiegase erfaßt, abgefackelt oder einer Nutzung zugeführt werden.

Der Erfolgsnachweis wie auch die unerläßliche laufende Kontrolle erfolgt im Zusammenhang mit der hier beschriebenen Gesamtmethode durch geoelektrische Sondierungen. Es können aber auch alle anderen bekannten Möglichkeiten v.a. der Grundwasserüberwachung herangezogen werden.

Zur abschließenden Rekultivierung - soweit sie nicht bereits zweckmäßig vorhanden ist - wird hier eine landschaftsgerechte Dauerbegrünung, etwa als ökologische Schutzzone einer landwirtschaftlichen Nutzung vorgezogen.

**Patentansprüche**

1. Verfahren zur nachträglichen in-situ-Abdichtung bzw. Nachdichtung bzw. Sanierung von Altdeponien, sog. Altlasten, und kontaminierten Standorten, dadurch gekennzeichnet, daß zunächst mittels an sich bekannter Methoden, vorzugsweise geoelektrischer Meßmethoden, die Gestalt, d.h. Form und Tiefe der Deponiesohle und der Böschungsbereiche festgestellt wird, daß daraufhin Rohre mit Öffnungen nahe bzw. an ihrem unteren Ende bzw. im unteren Bereich perforierte Rohre über die Deponiefläche verteilt bis zu dieser Deponiesohle und diesen Böschungsbereichen eingebracht werden und daß schließlich durch diese Rohre Dichtmassen zur Bildung einer dichten Wanne in die Sohlen- und Böschungsbereiche des Deponiekörpers eingebracht werden.

2. Verfahren nach Anspruch 1, dadurch gekennzeichnet, daß das das Einbringen der Dichtmasse durch Einpressen bei relativ niedrigem Druck, vorzugsweise maximal 10 bar, vorgenommen wird.

3. Verfahren nach Anspruch 1 oder 2, dadurch gekennzeichnet, daß als Dichtmasse eine Bentonit/Wasser-Suspension mit vorzugsweise 20 - 60 kg Bentonit je $m^3$ Wasser und gegebenenfalls mit Zusätzen von Zementen, Mahltonen, od.dgl., von Kreide, Wasserglas, od.dgl, verwendet wird.

4. Verfahren nach Anspruch 1 oder 2, dadurch gekennzeichnet. daß als Dichtmasse ein Harz, insbesondere in Form eines Gels, verwendet wird.

5. Verfahren nach einem der Ansprüche 1 bis 4, dadurch gekennzeichnet, daß die Einbringung der Dichtmasse vorzugsweise unter dem Eigengewichts-Druck dieser Masse vorgenommen wird, wobei zur Erhöhung des spezifischen Gewichtes der Dichtmasse dieser ein Zusatz mit höherem spezifischem Gewicht, z.B. Schwerspat, beigegeben wird.

6. Verfahren nach einem der Ansprüche 1 bis 5, dadurch gekennzeichnet, daß zur Minimierung der Sickerwässer eine wasserdichte Schicht oder eine Pflanzenabdeckung auf die Deponie aufgebracht wird.